# EUROPÄISCHE PATENTSCHRIFT

(11) **EP 0 846 071 B1**
(45) Veröffentlichungstag und Bekanntmachung des Hinweises auf die Patenterteilung: **13.09.2006**
(21) Anmeldenummer: 97930397.1
(22) Anmeldetag: 24.06.1997
(51) Int. Cl.: B64B 1/22

(54) **VERFAHREN ZUM GEZIELTEN ABSETZEN ODER AUFNEHMEN VON GÜTERN AUS LUFTFAHRZEUGEN**
METHOD FOR THE PRECISE SETTING DOWN OR PICKING UP OF CARGO FROM AIRSHIPS
PROCEDE POUR EMBARQUER OU DEBARQUER DE MANIERE CIBLEE DES PERSONNES/MARCHANDISES DANS DES AERONEFS

(30) Priorität: 25.06.1996 DE 19625297
(43) Veröffentlichungstag der Anmeldung: 10.06.1998
(73) Patentinhaber: CargoLifter AG, 65205 Wiesbaden (DE)
(72) Erfinder: SCHÄFER, Ingolf, D-35398 Giessen (DE)
(74) Vertreter: Effert, Udo
(86) Internationale Anmeldenummer: PCT/EP1997/003320
(87) Internationale Veröffentlichungsnummer: WO 1997/049606

(56) Entgegenhaltungen:
- DE-U- 29 509 940
- FR-A- 2 364 854
- GB-A- 2 055 728
- US-A- 3 393 769

## Beschreibung

Die Erfindung betrifft ein Verfahren zum gezielten Absetzen oder Aufnahmen von Gütern aus Luftfahrzeugen ohne daß diese landen, das zur räumlichen Fixierung der abzulassenden Last ein vorgespanntes räumliches Seilfachwerk nutzt.

Es ist bekannt, Güter oder Personen aus Luftfahrzeugen zu be- oder entladen. Dabei entsteht das Problem, daß zu diesem Zweck gelandet werden muß. Weiterhin ist bekannt, Personen oder Güter aus nicht gelandeten Luftfahrzeugen mittels einer Abseilwinde abzulassen oder aufzunehmen. Dabei entsteht das Problem, daß ein genaues Absetzen, insbesondere bei schwierigen Wetterbedingungen, nicht oder nur schwer möglich ist. Dieses Verfahren scheidet demnach bei einer Vielzahl von Anwendungsfällen aus.
In der FR-PS 2 364 854 ist ein Verfahren zum präzisen Absetzen einer von einem lenkbaren Ballon getragenen Last beschrieben. Die Last hängt an einem Rahmen, der in einem Punkt vom Ballon getragen wird. Der Rahmen wird zum Lastaustausch über ein Seilfachwerk mit mindestens drei Verankerungspunkten am Boden verbunden und ständig unter Spannung gehalten. Um den Lastrahmen in horizontaler Lage zu halten, müssen alle Seile des Fachwerkes gleichzeitig mit gleicher Kraft angezogen werden. Aus diesem Verfahren sind keine Merkmale bekannt, die eine sichere Funktion und ein wirklich präzises Absetzen einer Last ermöglichen.

Der Erfindung liegt daher die Aufgabe zugrunde, ein Verfahren zum gezielten Absetzen oder Aufnahmen von Gütern aus Luftfahrzeugen ohne daß diese landen vorzuschlagen, das zur räumlichen Fixierung der abzulassenden Last ein vorgespanntes räumliches Seilfachwerk nutzt, so auszuführen, daß ein sicherer Lastaustausch und ein den Erfordernissen angepaßtes gezieltes bis hin zum punktgenauen Absetzen oder Aufnehmen einer Last ermöglicht, auch wenn die Umgebungsbedingungen ein ruhiges Halten des Luftfahrzeugs nicht erlauben.

Diese Aufgabe wird bei dem Verfahren zum gezielten Absetzen von Gütern aus Luftfahrzeugen ohne daß diese landen und das zur räumlichen Fixierung der abzulassenden Last ein vorgespanntes räumliches Seilfachwerk nutzt, erfindungsgemäß dadurch gelöst, daß die Auftriebskraft gleichmäßig auf die Seile des Seilfachwerkes eingestellt und ein Zusatzauftrieb erzeugt wird, der anfangs gering ist und nach dem Spannen wesentlich verstärkt wird, durch eine Seilanordnung die erforderliche Beruhigung der Last einstellbar ist und nach dem Plazieren der Last auf dem Boden eine Ballastaufnahme erfolgt.
Weitere Merkmale der Erfindung sowie vorteilhafte Ausgestaltungen ergeben sich aus den weiteren Ansprüchen, der Beschreibung und den Zeichnungen.

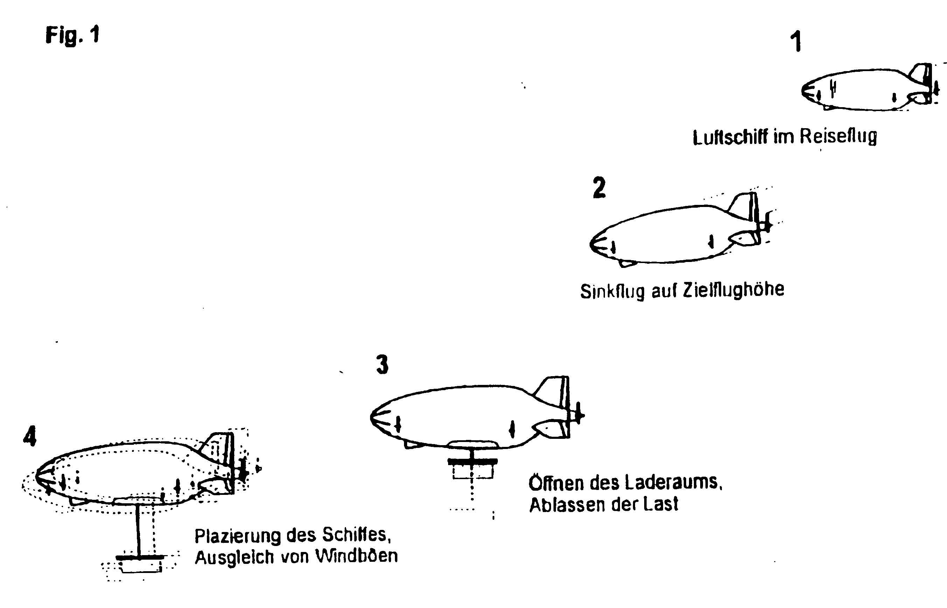

Die Erfindung wird nachfolgend an einem Ausführungsbeispiel näherer erläutert Die zugehörigen Zeichnungen zeigen in den Fig. 1-4 den chronologischen Ablauf des erfindungsgemäßen Verfahrens beim Absetzen einer Last aus einem Luftschiff als Luftfahrzeug.

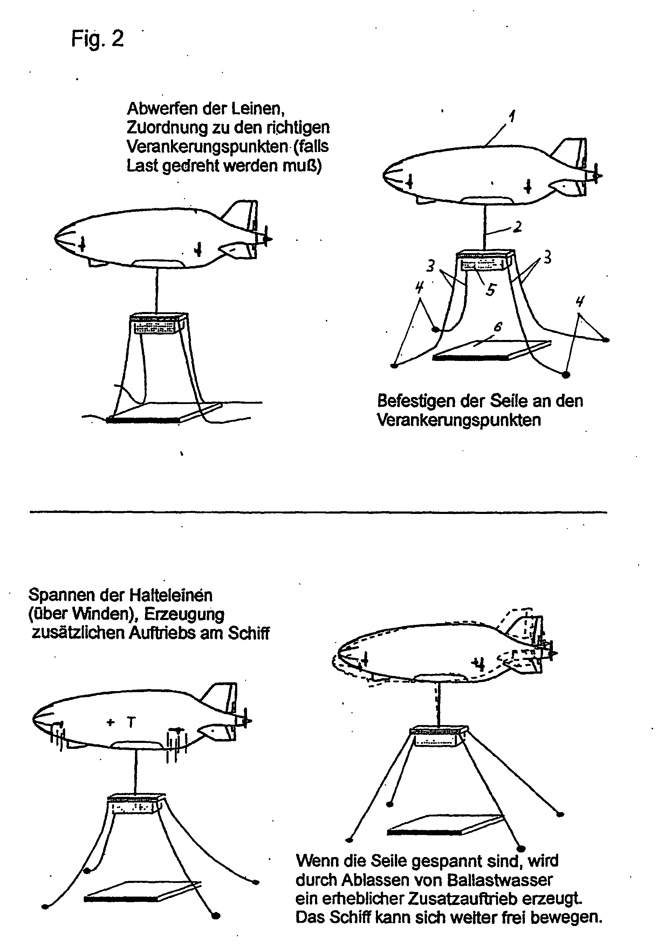

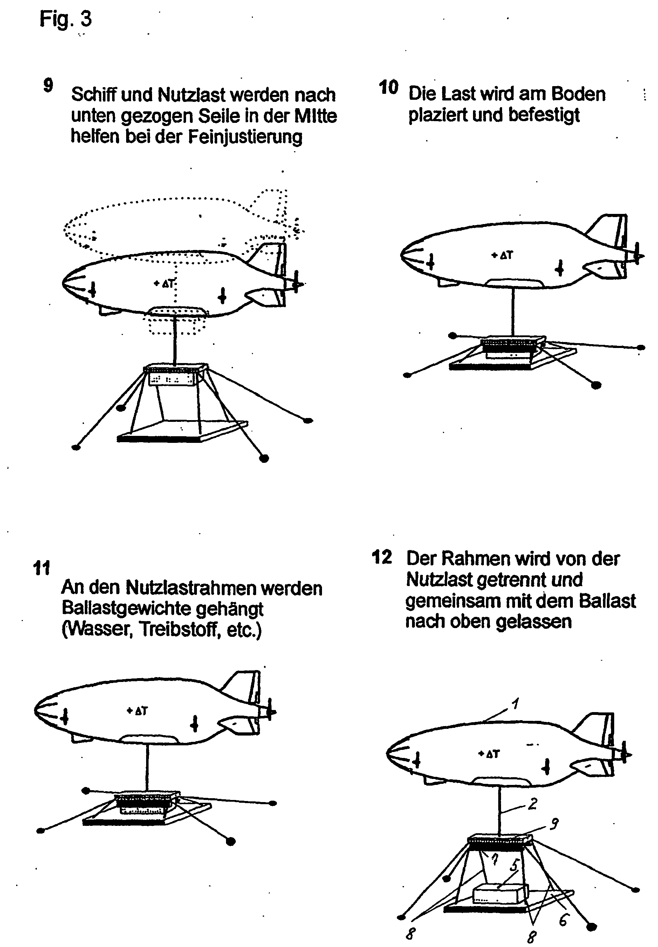

Bevor der Verfahrensablauf erläutert wird, noch einige Details.
Aufgrund des vorgespannten Raumfachwerks 3 gemäß Erfindung ist die Lage der Last 5 im Raum eindeutig fixiert und kann so gezielt zum Boden 6 abgesenkt oder vom Boden 6 aufgenommen werden, ohne daß verlangt wird, daß sich das Luftfahrzeug 1 in Ruhe befindet. Das Luftfahrzeug 1 selbst befindet sich dabei in einem sinnvoll gewählten Abstand oberhalb der Last 5.
Es ist zweckmäßig, daß die Vorspannung im Seilfachwerk 3 durch das Luftfahrzeug 1 oder an ihm angeordnete Systeme aufgebracht wird, so daß weitere Hilfssysteme vom Boden aus vermieden werden können.
Es ist vorteilhaft, zum Manövrieren der Last 5 in Bodennähe neben dem Seilfachwerk 3 zum Fixieren der Last 5 ein weiteres Seilsystem mit Hilfsseilen 8 vorzusehen, um so die aufgrund der großen Spreizwinkel im Seilfachwerk 3 auftretenden Probleme abzumildern.
Alternativ kann auch das Seilfachwerk 3 über entsprechend gestaltete Umlenkrollen so aufgebaut werden, daß der Spreizwinkel klein gehalten wird, d. h. der Anlenkpunkt nach oben näher während des Ablassens sich in Richtung Abstellort bewegt.
Der Abstand zwischen Luftfahrzeug 1 und Last 5 kann wahlweise fest eingestellt sein oder mittels eines Windensystems variiert werden, so daß sich die Last 5 während des Transports innerhalb des Luftfahrzeugs 1 befindet. Zum Absetzen oder Aufnehmen selbst wird die Länge der Seile 3 im Seilfachwerk verändert, was über Winden oder Umlenkrollen erfolgen kann. Die Position und Anzahl der Winden je Seil ist frei wählbar.
In den Fig.1 bis 4 ist ein komplettes Verfahren des Lastabsetzens dargestellt. Analog wird die Lastaufnahme in umgekehrter Reihenfolge der Verfahrensschritte durchgeführt. Einzelne Schritte können sinnvoll zeitgleich ablaufen und sind hier nur der Übersichtlichkeit halber getrennt worden. Weiterhin wurde eine möglichst umfassende Darstellung gewählt, d. h., einzelne Schritte können, falls die konstruktive Umsetzung dies zuläßt, entfallen.
Schritte 1 bis 4 sind in Fig.1 dargestellt. In Schritt 1 befindet sich das Luftfahrzeug 1 noch im Reiseflug auf den Zielort. In Schritt 2 sinkt das Luftfahrzeug 1 auf die Zielflughöhe, die nach den örtlichen Gegebenheiten und Erfordernissen gewählt wird. In Schritt 3 wird, falls erforderlich, der Laderaum geöffnet und die Last 5 abgelassen. Alternativ befindet sich die Last 5 grundsätzlich unterhalb des Luftfahrzeugs 1, muß also nicht speziell abgelassen werden. Dann entfällt dieser Schritt. In Schritt 4 wird das Luftfahrzeug 1 in der Zielflughöhe plaziert und muß nun nur noch die Störungen durch Wind und Auftriebsänderungen ausgleichen. Es muß aber nicht in Ruhe sein, sondern ist in ständiger Bewegung.
Die Schritte 5 bis 8 sind auf Fig. 2 dargestellt. In Schritt 5 werden die Leinen 3 zur Fixierung am Boden 6 abgeworfen und zu den vorgesehenen Befestigungsstellen 4 gebracht. In Schritt 6 werden die Leinen 3 an den Befestigungspunkten 4 angebracht. Dabei sind die Leinen 3 lose. In Schritt 7 werden die Leinen 3 über Winden gespannt. In Schritt 8 wird die Vorspannung durch Erhöhung des Auftriebs des oder am Luftfahrzeug 1 oder am Lastrahmen 9 im notwendigen Umfang gesteigert. Die Schritte 9 bis 12 sind auf Fig. 3 zusammengestellt. In Schritt 9 wird die Last über die unteren Seile 3; 8 nach unten gezogen. Dabei ist der Abstand Luftfahrzeug - Last, je nach Erfordernis, konstant oder variabel.

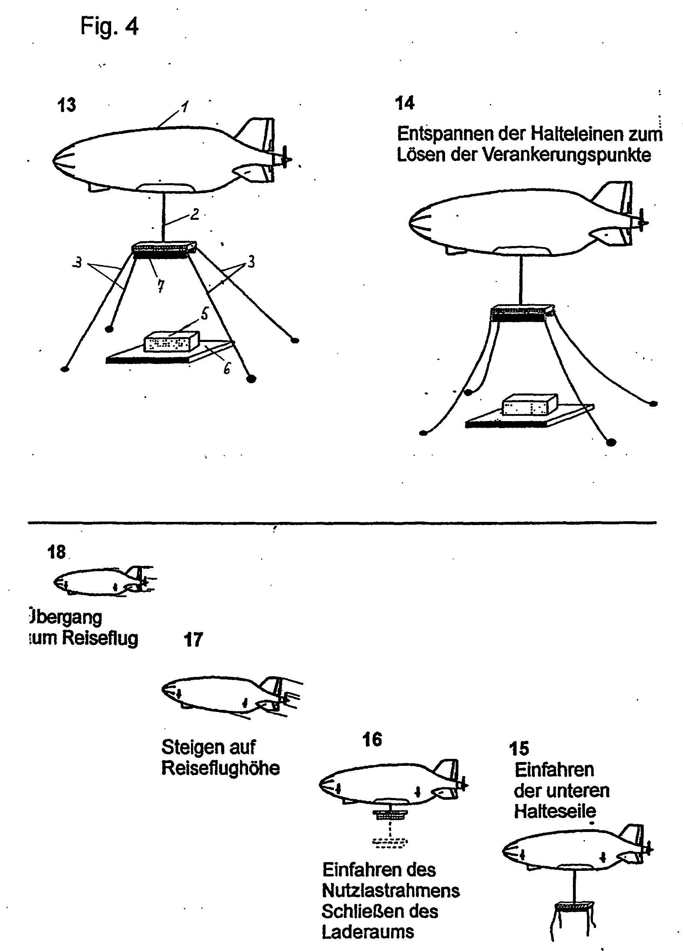

Bei eventuell erforderlicher besonders hoher Absetzgenauigkeit kann über Hilfsseile 8 oder mittels entsprechender Umlenkmimiken variabler unterer Anlenkpunkte der Hauptseile 3 eine genaue Feinjustierung erzielt werden. In Schritt 10 wird die Last 5 am Boden 6 plaziert und befestigt. In Schritt 11 werden evtl. erforderliche Ausgleichsgewichte 7 am Lastrahmen 9 angebracht. In Schritt 12 wird die Last 5 vom Rahmen 9 getrennt und wieder nach oben gelassen. Die Schritte 13-18 sind auf Fig. 4 dargestellt. In Schritt 13 ist der Lastrahmen 9 wieder oberhalb des Absetzpunkts 6, eventuell notwendige Auftriebsausgleichsmaßnahmen und Kontrollen werden durchgeführt. In Schritt 14 werden die Seile 3 gelöst, wobei, soweit vorgesehen, diese zuvor entspannt werden. In Schritt 15 werden die Seile 3, soweit vorgesehen, eingefahren. In Schritt 16 wird der Rahmen 9 und er Ballast 7, soweit vorgesehen, eingefahren. In Schritt 17 wird der Übergang zum Reiseflug eingeleitet. In Schritt 18 befindet sich das Luftfahrzeug 1 wieder im Reiseflug. Alternativ zum gezeigten Luftschiff 1 kann das Luftfahrzeug auch ein Ballon oder ein Hubschrauber oder jedes andere Luftfahrzeug sein, daß keine Horizontalbewegung benötigt um Auftrieb zu erzeugen.
Entsprechend kann auf den gezeigten Rahmen 9 zum Aufhängen der Last 5 verzichtet werden, wenn sich dies aus der Problemstellung als sinnvoll ergibt.

### Bezugszeichenliste

- 1: Luftfahrzeug
- 2: Tragseil
- 3: Leinen des Seilfachwerkes
- 4: Verankerungspunkte
- 5: Last
- 6: Absetzfläche am Boden
- 7: Ballast
- 8: Hilfsseile
- 9: Nutzrahmen

## Patentansprüche

1. Verfahren zum gezielten Absetzen von Gütem von Luftfahrzeugen (1) auf den Boden, ohne dass diese landen, welches zur räumlichen Fixierung der abzulassenden Last (5) ein vorgespanntes räumliches Seilfachwerk (3) nutzt, **gekennzeichnet durch** die Verfahrensschritte:
- Abwerfen von Leinen (3) von einem Nutzlastrahmen (9) für die Last (5) zum Boden,
- Zuordnung der Leinen (3) zu den richtigen Verankerungspunkten(4),
- Befestigen der Leinen (3) an den Verankerungspunkten (4),
- Spannen der Leinen (3),
- Erzeugung eines erheblichen Zusatzauftriebs am Luftfahrzeug (1) nach Spannen der Leinen (3) und
- das Luftfahrzeug (1) und die Last (5) werden **durch** weitere Seile (8) feinjustiert. und nach unten zum Boden gezogen.

2. Verfahren nach Anspruch 1, **dadurch gekennzeichnet, dass** beim Beladen des Luftfahrzeugs (1) das Verfahren umgekehrt wird und dabei die Feinjustierung gelockert, alle Seile (3, 8) entspannt und schließlich von den Verankerungspunkten (4) gelöst werden.

3. Verfahren nach Anspruch 1 und 2, **dadurch gekennzeichnet, daß** die Länge der Seile (3) im Fachwerk über am Boden befindliche Winden eingestellt wird.

4. Verfahren nach Anspruch 1 und 2, **dadurch gekennzeichnet, daß** die Länge der Seile (3) im Fachwerk über am oberen Punkt des Seilfachwerkes befindliche Winden eingestellt wird.

5. Verfahren nach Anspruch 1 und 2, **dadurch gekennzeichnet, daß** die Länge der Seile (3) im Fachwerk über sich in den Seilen befindliche Winden eingestellt wird.

6. Verfahren nach Anspruch 1 und 2, **dadurch gekennzeichnet, daß** die Länge der Seile (3) über im Fachwerk über Umlenkrollen und mehrfaches Hin- und Herführen zwischen zwei Punkten eingestellt werden kann.

7. Verfahren nach Anspruch 1, **dadurch gekennzeichnet, dass** der Zusatzauftrieb durch das Luftfahrzeug (1) selbst erzeugt wird.

8. Verfahren nach Anspruch 1, **dadurch gekennzeichnet, dass** der Zusatzauftrieb durch Ablassen von Ballastwasser (7) erzeugt wird.

9. Verfahren nach einem der Ansprüche 1 bis 8, **dadurch gekennzeichnet, dass** zum Manövrieren der Last (5) zusätzliche Seilsysteme (8) bzw. Hilfsseile mit kleinerem Spreizwinkel eingesetzt werden.

10. Verfahren nach einem der Ansprüche 1 bis 9, **dadurch gekennzeichnet, dass** zum Manövrieren der Last in Bodennähe der Spreizwinkel im Seilfachwerk (3) klein gehalten wird.

11. Verfahren nach einem der Ansprüche 1 bis 10, **dadurch gekennzeichnet, dass** die Last (5) sich in festem Abstand unterhalb des Luftfahrzeugs (1) befindet.

12. Verfahren nach einem der Ansprüche 1 bis 10, **dadurch gekennzeichnet, dass** der Abstand Last (5) - Luftfahrzeug (1) über ein oder mehrere Seile (2) und Winden verändert werden kann.

13. Verfahren nach Anspruch 1, **dadurch gekennzeichnet, daß** bevor die Nutzlast (5) vom Rahmen (9) getrennt wird, in/an den Nutzlastrahmen (9) Ballast (7) etwa mit dem Gewicht der Nutzlast (5) aufgenommen wird.

## Claims

1. Method for the exact setting-down of goods from aircraft (1) onto the ground, without said aircraft landing, which method uses an initially biased, spatial rope framework (3) for the spatial fixing of the load (5) to be let-down, **characterised by** the following method steps:
- throwing-down lines (3) from a useful load frame (9) for the load (5) to the ground;
- assigning the lines (3) to the correct anchoring points (4);
- securing the lines (3) at the anchoring points (4);
- tensioning the lines (3);
- producing a considerable additional lift on the aircraft (1) after tensioning the lines (3); and
- the aircraft (1) and the load (5) are finely adjusted by additional ropes (8) and drawn downwardly to the ground.

2. Method according to claim 1, **characterised in that**, when loading the aircraft (1), the method is reversed and, in such case, the fine adjustment is loosened, all of the ropes (3, 8) are slackened, and finally they are released from the anchoring points (4).

3. Method according to claims 1 and 2, **characterised in that** the length of the ropes (3) in the framework is adjusted via winches situated on the ground.

4. Method according to claims 1 and 2, **characterised in that** the length of the ropes (3) in the framework is adjusted via winches situated at the upper point of the rope framework.

5. Method according to claims 1 and 2, **characterised in that** the length of the ropes (3) in the framework is adjusted via winches situated in the ropes.

6. Method according to claims 1 and 2, **characterised in that** the length of the ropes (3) in the framework can be adjusted via guide rollers and multiple to-and-fro movements between two points.

7. Method according to claim 1, **characterised in** the additional lift is generated by the aircraft (1) itself.

8. Method according to claim 1, **characterised in that** the additional lift is generated by releasing ballast water (7).

9. Method according to one of claims 1 to 8, **characterised in that** additional rope systems (8) or respectively auxiliary ropes with a smaller angle of spread are used to manoeuvre the load (5).

10. Method according to one of claims 1 to 9, **characterised in that** the angle of spread in the rope framework (3) is kept small in order to manoeuvre the load in the vicinity of the ground.

11. Method according to one of claims 1 to 10, **characterised in that** the load (5) is situated at a fixed distance beneath the aircraft (1).

12. Method according to one of claims 1 to 10, **characterised in that** the distance between the load (5) and the aircraft (1) can be altered via one or more ropes (2) and winches.

13. Method according to claim 1, **characterised in that**, before the useful load (5) is separated from the frame (9), ballast (7) is accommodated in/on the useful load frame (9) substantially with the weight of the useful load (5).

## Revendications

1. Procédé pour le dépôt ciblé de marchandises d'aéronefs(1) sur le sol sans que ces derniers atterrissent, qui utilise pour la fixation en l'air de la charge à faire descendre (5) un système de cordes (3) spatial prétendu, **caractérisé par** les étapes de procédés suivantes :
- lancement de cordes (3) vers le sol à partir d'un cadre de charge utile (9) pour la charge (5),
- affectation des cordes (3) aux points d'ancrages corrects (4),
- fixation des cordes (3) aux points d'ancrage (4),
- tension des cordes (3)
- génération d'une sustentation supplémentaire considérable de l'aéronef (1) après la tension des cordes (3) et
- l'aéronef (1) et la charge (5) sont réglés avec précision par d'autres cordes (8).

2. Procédé selon la revendication 1, **caractérisé en ce que**, lors du chargement de l'aéronef (1), le procédé est inversé, le réglage de précision étant relâché, toutes les cordes (3, 8) étant détendues et finalement détachées des points d'ancrage (4).

3. Procédé selon les revendications 1 et 2, **caractérisé en ce que** la longueur des cordes (3) du système est réglée via des treuils situés au sol.

4. Procédé selon les revendications 1 et 2, **caractérisé en ce que** la longueur des cordes (3) du système est réglée via des treuils qui se trouvent au point supérieur du système de cordes.

5. Procédé selon les revendications 1 et 2, **caractérisé en ce que** la longueur des cordes (3) du système est réglée via des treuils qui se trouvent dans les cordes.

6. Procédé selon les revendications 1 et 2, **caractérisé en ce que** la longueur des cordes (3) peut être réglée via des poulies de déviation et un guidage aller et retour multiple entre deux points.

7. Procédé selon la revendication 1, **caractérisé en ce que** la sustentation supplémentaire est générée par l'aéronef (1) lui-même.

8. Procédé selon la revendication 1, **caractérisé en ce que** la sustentation supplémentaire est générée par le largage d'eau de ballastage (7).

9. Procédé selon une des revendications 1 à 8, **caractérisé en ce que** pour manoeuvrer la charge (5), des systèmes de cordes supplémentaires (8) et/ou des cordes auxiliaires avec un angle d'écartement plus petit sont utilisés.

10. Procédé selon une des revendications 1 à 9, **caractérisé en ce que**, pour manoeuvrer la charge à proximité du sol, l'angle d'écartement dans le système de cordes (3) est maintenu petit.

11. Procédé selon une des revendications 1 à 10, **caractérisé en ce que** la charge (5) se trouve à une distance fixe en dessous de l'aéronef (1).

12. Procédé selon une des revendications 1 à 10, **caractérisé en ce que** la distance entre la charge (5) et l'aéronef (1) peut être modifiée via un(e) ou plusieurs cordes (2) et treuils.

13. Procédé selon la revendication 1, **caractérisé en ce qu'**avant que la charge utile (5) soit séparée du cadre (9), du ballast (7) au poids approximativement identique à celui de la charge utile (5) est remonté dans/au niveau du cadre de la charge utile (9).
